Europäisches Patentamt

European Patent Office

Office européen des brevets

(19)

(11) Veröffentlichungsnummer: **0 182 037**
**B1**

# (12) EUROPÄISCHE PATENTSCHRIFT

(45) Veröffentlichungstag der Patentschrift:
**02.08.89**

(21) Anmeldenummer: **85111998.2**

(22) Anmeldetag: **21.09.85**

(51) Int. Cl.⁴: **B 26 D 7/26** // **B29B9/06**

(54) **Rundlaufendes Schneidwerkzeug, insbesondere zum Stranggranulieren von Kunststoffen.**

(30) Priorität: **25.10.84 DE 3439029**

(43) Veröffentlichungstag der Anmeldung:
**28.05.86 Patentblatt 86/22**

(45) Bekanntmachung des Hinweises auf die Patenterteilung:
**02.08.89 Patentblatt 89/31**

(84) Benannte Vertragsstaaten:
**AT BE CH DE FR GB IT LI LU NL SE**

(56) Entgegenhaltungen:
**DE-A-2 215 029**
**DE-A-2 355 290**
**DE-A-2 829 732**
**FR-A-355 541**
**GB-A-1 063 544**
**US-A-3 987 525**

(73) Patentinhaber: **Fritsch, Rudolf P., Goslarerstrasse 58, D-7000 Stuttgart 31 (DE)**
Patentinhaber: **Hench, Hans, Dipl.- Ing., Sonnenhalde 31, D-7851 Inzlingen (DE)**

(72) Erfinder: **Fritsch, Rudolf P., Goslarerstrasse 58, D-7000 Stuttgart 31 (DE)**
Erfinder: **Hench, Hans, Dipl.- Ing., Sonnenhalde 31, D-7851 Inzlingen (DE)**

(74) Vertreter: **Patentanwälte Dipl.- Ing. W. Scherrmann Dr.- Ing. R. Rüger, Webergasse 3 Postfach 348, D-7300 Esslingen (Neckar) (DE)**

## Beschreibung

Die Erfindung betrifft ein rundlaufendes Schneidwerkzeug, insbesondere zum Stranggranulieren von Kunststoffen, mit einem zylindrischen Werkzeugkörper, der eine Anzahl in Umfangsrichtung gleichmäßig verteilt angeordneter Längsnuten aufweist, die im Bereiche der Nutenöffnung mit einander gegenüberliegenden, aufeinander zu weisenden Klemmflächen ausgebildet sind und von denen jede ein lösbar eingesetztes, sich im wesentlichen über die axiale Länge des Werkzeugkörpers erstreckendes, längliches Schneidelement enthält, das den Klemmflächen zugeordnete, entsprechend gestaltete Abstützflächen aufweist, mit denen es auf den Klemmflächen lagefest verklemmt ist, wobei die Schneidelemente durch in die jeweilige Längsnut eingesetzte Klemmkörper im wesentlichen in Radialrichtung gegen den Werkzeugkörper verspannt sind, welche gegen das jeweilige Schneidelement und gegen Wandungsteile der Längsnut abgestützt sind und wobei den Klemmkörpern wenigstens eine verstellbare Spanneinrichtung zugeordnet ist.

Bei der Herstellung von Granulaten nach dem Stranggranulierverfahren aus stark füllstoffhaltigen Kunststoffen, beispielsweise mit bis zu 40 % Glasfasern oder Keramikmehl gefüllten Polyamiden, sind die mit feststehenden Amboßmessern zusammenwirkenden Schneidelemente der Schneidwerkzeuge einem sehr hohen Verschleiß unterworfen. Auch läßt sich nicht ausschließen, daß durch Fremdkörpereinwirkung gelegentlich mehrere Schneidelemente gebrauchsunfähig gemacht werden. Es geht deshalb der Wunsch dahin, abgenutzte oder schadhafte Schneidelemente austauschen zu können.

Aus der DE-A-2 829 732 ist schon ein Schneidwerkzeug bekannt geworden, bei dem in entsprechende Längsnuten des zylindrischen Werkzeugkörpers platten- oder leistenförmige Schneidelemente eingesetzt sind, von denen jedes mittels eines zumindest teilweise aus plastischem oder elastomerem Material bestehenden Klemmkörpers mit der Wandung der jeweiligen Längsnut verspannbar ist. Um ein Wegfließen des unter hohem Druck stehenden plastischen oder elastomeren Materials und ein dadurch ausgelöstes Nachlassen der Spannwirkung zu verhüten, muß die Längsnut gegen das eingesetzte Schneidelement abgedichtet sein, was eine enge Tolerierung der Schneidelemente und der Längsnuten erforderlich macht. Außerdem kann bei längeren Betriebszeiträumen nicht verhindert werden, daß bei aus elastomerem Material bestehenden Klemmkörpern das Material mit den Schneidelementen oder dem zugeordneten Aufnahmeraum in dem Werkzeugkörper verklebt, mit dem Ergebnis, daß der Wechsel von Schneidelementen schwierig und aufwendig wird. Schließlich ist es nicht einfach, mit solchen bolzenartigen, sich über beträchtliche Teile der axialen Länge des Werkzeugkörpers erstreckenden Klemmkörpern aus plastischem oder elastomerem Material eine gleichmäßige Klemmwirkung über die gesamte Länge der Schneidelemente zu erzielen.

Bei einem aus der GB-A-1 063 544 bekannten Schneidwerkzeug zum Schneiden von Papier, Pappe, Textilien etc. sind die Schneidelemente in Gestalt von ringförmigen Messern auf einer Messerwelle dadurch befestigt, daß jedes der Messer eine zu der Messerwelle hin offene Ringnut aufweist, in die als Klemmkörper dienende Kugeln eingelegt sind, die in einer Reihe nebeneinanderliegend angeordnet sind. Eine als Spannschraube ausgebildete, etwa radial wirkende Spanneinrichtung bewirkt über eine Druckkugel eine Verspannung der Kugeln sowohl gegeneinander, als auch gegen die Messerwelle und die Wandung der Ringnut. Bei diesem Schneidwerkzeug sind die ringförmigen Messer mit der Messerwelle lediglich kraftschlüssig und nicht formschlüssig gekuppelt, was wegen der Ringgestalt der Messer auch nicht erforderlich ist.

Bei einem anderen aus der DE-A-2 355 290 bekannten Schneidwerkzeug sind die leistenförmigen Schneidelemente ebenfalls jeweils gegen eine Seitenwand der im Querschnitt U-förmigen parallelflankig begrenzten Längsnuten des Werkzeugkörpers verklemmt. Die dazu verwendeten Klemmkörper sind in Gestalt von zylindrischen Rollen ausgebildet, deren Durchmesser kleiner ist als die Nutenbreite und die in jeder Längsnut in Form einer Reihe mit gegeneinander versetzten Achsen angeordnet sind. Die Längsnuten sind im Bereiche der Stirnseiten des Werkzeugkörpers durch blockartige Widerlager verschlossen, die als Spanneinrichtungen dienende Spannschrauben tragen, welche es gestatten, die Klemmkörper einer solchen Reihe sowohl gegeneinander als auch gegen die Nutseitenwandungen zu verspannen, von denen eine das auf diese Weise reibschlüssig festgeklemmte Schneidelement trägt. Um zu vermeiden, daß die zylindrischen Rollen bei nachlassender Spannung unter Fliehkraftwirkung nach außen geschleudert werden, müssen die einzelnen Rollen mit umlaufenden Halterillen ausgebildet sein, in die eigene Halteleisten eingreifen. Dies bedeutet einen beträchtlichen Aufwand. Davon abgeschen sind die leistenartigen Schneidelemente lediglich reibschlüssig gehaltert und derart ausgebildet, daß beim Austausch eines Schneidelementes das neu eingesetzte Schneidelement genau auf den Flugkreis der übrigen Schneidelemente einjustiert werden muß, was ohne besondere Vorrichtungen erfahrungsgemäß nicht ohne weiteres möglich ist.

Schließlich ist aus der US-A-3 987 525 ein rundlaufendes Schneidwerkzeug, insbesondere zum Stranggranulieren von Kunststoff bekannt, von dem die Erfindung ausgeht und bei dem die in den Werkzeugkörper eingearbeiteten Längsnuten ein kegeliges Teil und ein von diesem ausgehendes und zu dem Umfang des Werkzeugkörpers führendes schlitzartiges Teil aufweisen, das durch einander gegenüberstehende Keilflächen mit verhältnismäßig kleinem Keilwinkel begrenzt ist. In jedes schlitzartige Nutenteil ist ein im Querschnitt trapezförmiges Schneidelement eingesetzt, das durch zwei von den beiden Stirnseiten des Werkzeugkörpers her in die kegeligen Nutenteile eingesetzte, als Kegelstifte ausgebildete Klemmkörper radial nach außen gedrückt und zwischen den Keilflächen verklemmt ist. Diese Keilflächen können deshalb auch als Klemmflächen bezeichnet werden, wobei die Vorder- und die Rückseite der fast über ihre gesamte Höhe in dem schlitzartigen Nutenteil aufgenommenen Schneidelemente Abstützflächen tragen. Wegen des verhältnismäßig kleinen Keilwinkels dieser Keil- oder Klemmflächen hängt die genaue radiale Stellung, die das Schneidelement im gespannten Zustand bezüglich des Werkzeugkörpers einnimmt, bis zu einem gewissen Grade davon ab, mit welcher Kraft die zugeordneten Kegelstifte in die kegeligen Nutenteile eingedrückt wurden. Es müssen deshalb beim Schneidelementwechsel oder bei der Neubestückung des Werkzeugkörpers auftretende Lageunterschiede der einzelnen Schneidelemente durch entsprechendes Umfangs-Nachschleifen beseitigt werden.

Aufgabe der Erfindung ist es deshalb, ein rundlaufendes Schneidwerkzeug der eingangs genannten Art mit einzeln austauschbaren Schneidelementen zu schaffen, das sich bei unkompliziertem Aufbau durch eine exakt lagerichtige, eng tolerierte Halterung der Schneidelemente an dem Werkzeugkörper auszeichnet, wobei die Schneidelemente einwandfrei gespannt sind.

Zur Lösung dieser Aufgabe ist das erfindungsgemäße Schneidwerkzeug durch die Merkmale des Patentanspruchs 1 oder 2 gekennzeichnet.

Die an dem Werkzeugkörper im Bereiche der Längsnuten und im Fußbereich an den Schneidelementen vorgesehenen, einander zugeordneten Klemm- und Abstützflächen ergeben eine exakt lagerichtige Fixierung der Schneidelemente bezüglich des Werkzeugkörpers, die unabhängig von der Klemmung ist und keinerlei Einstellarbeiten beim Einsetzen oder Wechseln der Schneidelemente bedarf.

Die Schneidelemente können bei gelöster Spanneinrichtung und in die Längsnuten eingesetzten Klemmelementen einfach seitlich in die Längsnuten eingeschoben werden. Nach dem Festziehen der jeweiligen Spanneinrichtung sind sie durch die Klemmelemente in Radialrichtung gegen die genau maßhaltigen Klemmflächen des Werkzeugkörpers verspannt, ohne daß ihre Lage durch den Spannvorgang beeinflußt werden könnte. Nach dem Lösen der jeweiligen Spanneinrichtung können die Schneidelemente einfach seitlich aus den Längsnuten herausgezogen und durch andere Schneidelemente ersetzt werden.

Die Schneidelemente und gegebenenfalls der Werkzeugkörper können als Feingußteile hergestellt werden, wobei an dem Werkzeugkörper dann lediglich die zum Aufsetzen auf die Welle vorhandene Innenbohrung, die üblichen Paßbohrungen in den Stirnflächen des Werkzeugkörpers und die Klemmflächen in den einzelnen Längsnuten spanabhebend bearbeitet werden müssen. Ähnlich bedürfen bei den Schneidelementen lediglich die Abstützflächen und gegebenenfalls die Schneiden der Bearbeitung.

In einer ersten Ausführungsform ist die Anordnung derart getroffen, daß die Klemmkörper Kugeln sind, die jeweils in einer Reihe mit gegeneinander versetzten Mitten in eine Längsnut eingesetzt sind, und daß jede Kugelreihe in Nutenlängsrichtung beidseitig gegen an dem Werkzeugkörper angeordnete Widerlager abgestützt ist, von denen wenigstens eines die den Kugeln dieser Reihe ihre Vorspannung erteilende Spanneinrichtung aufweist.

Die Spannung der Schneidelemente erfolgt dabei gleichmäßig über ihre gesamte axiale Länge. Irgendwelche besonderen Maßnahmen zur Halterung der Metallkugeln in den Längsnuten sind nicht erforderlich, da die Längsnuten durch die Schneidelemente selbst in Umfangsrichtung völlig verschlossen sind.

Die Längsnutenbreite ist zweckmäßigerweise im wesentlichen gleich oder geringfügig größer als der Kugeldurchmesser, so daß die Kugeln einer Reihe mit ihren Mittelpunkten näherungsweise auf einer gemeinsamen, die Werkzeugkörperdrehachse enthaltenden Radialebene liegen, in der sie abwechselnd unterschiedliche radiale Abstände von der Werkzeugkörperdrehachse aufweisen.

Da die Längsnuten durch die eingeschobenen Schneidelemente radial verschlossen sind, sind die Kugeln jeder Reihe von selbst unverlierbar gehaltert. Zur Erleichterung der Montage kann die Anordnung zusätzlich derart getroffen werden, daß die Kugeln jeder Reihe durch ein Käfig in der zugeordneten Längsnut gehalten sind. Damit können beispielsweise alle Längsnuten des unbestückten Werkzeugkörpers zunächst mit Kugeln gefüllt und erst anschließend die Schneidelemente eingeschoben werden.

In einer zweiten Ausführungsform, die in ihrem Aufbau noch einfacher ist, sind die Klemmkörper zylindrische Spannhülsen, die über einen Teil ihrer Länge geschlitzt und im Bereiche ihrer Bohrung mit innenliegenden keilförmigen oder konischen Spannflächen ausgebildet sind, welche auf einer konischen Spreizfläche über in die ein Innengewinde tragende Bohrung eingeschraubten Spannschraube abgestützt sind, wobei in jede Längsnut wenigstens zwei Spannhülsen mit von der Stirnseite des Werkzeugkörpers her zugänglichen Spannschrauben eingesetzt sind.

Dabei kann in jeder Längsnut wenigstens ein zwischen den Spannhülsen liegendes Distanzstück angeordnet sein.

Beide Ausführungsformen ergeben eine völlig glatte Gestaltung des Werkzeugkörpers in dem Bereich zwischen den Schneidelementen, die frei von Vertiefungen, Ausnehmungen u.dgl. Unregelmäßigkeiten ist, an denen sich Kunststoffmaterial festsetzen könnte, das bei einem Farbwechsel zu Schwierigkeiten führen würde.

Durch die Klemm- und Abstützflächen ist auch die Schrägstellung der Schneidelemente bezüglich des ihrer Schneide zugeordneten Radius jeweils eindeutig definiert.

Die jeweils paarweise einander zugeordneten Klemmflächen sind mit Vorteil jeweils im wesentlichen V-förmig aufeinander zu weisend ausgebildet, wobei sie durch nutenartige Vertiefungen in den Seitenwänden der Längsnuten gebildet sein können. Diese nutenartigen Vertiefungen können sich über die gesamte axiale Länge des Werkzeugkörpers erstrecken und zu den Stirnflächen des Werkzeugkörpers hin öffnen, so daß die Schneidelemente bei gelösten Spanneinrichtungen oberhalb der die Spanneinrichtungen tragenden Widerlager einfach eingeschoben werden können.

Die Schneidelemente weisen mit Vorteil in dem in den Längsnuten liegenden Fußbereich den Abstützflächen gegenüberliegende Anlageflächen für die Klemmelemente auf, die zweckmäßigerweise durch eine im Querschnitt etwa V-förmige Nut gebildet sein können. Auf diese Weise läßt sich erreichen, daß die von den Klemmelementen in radialer Richtung auf die Schneidelemente ausgeübten Kräfte auf die beiden Abstützflächen eines Schneidelementes gleichmäßig verteilt werden, so daß sich auch eine gleichmäßige Abstützung auf den zugeordneten Klemmflächen des Werkzeugkörpers ergibt.

Um eine gute Abstützung der Kugeln auf dem Boden der Längsnuten zu erzielen, ist es vorteilhaft, wenn die Längsnuten in ihrer Bodenwand der Kugelform angepaßte Auflageflächen aufweisen, die beispielsweise durch eine im Querschnitt V- oder teilkreisförmige Vertiefung gebildet sein können. Dabei können zur Vereinfachung der Herstellung die Längsnuten im Querschnitt auch im wesentlichen schwalbenschwanzförmig ausgebildet sein.

In der Zeichnung sind Ausführungsbeispiele des Gegenstandes der Erfindung dargestellt. Es zeigen

Fig. 1 ein rundlaufendes Schneidwerkzeug gemäß der Erfindung in einer ersten Ausführungsform, in einer Seitenansicht, teilweise aufgeschnitten und im Ausschnitt,

Figur 2 das Schneidwerkzeug nach Figur 1, geschnitten längs der Linie II-II der Figur 1 in einer Seitenansicht und in einer Teildarstellung,

Figur 3 ein Teil einer Kugelreihe der Anordnung nach Figur 2 in der Ausführungsorm mit zugeordnetem Käfig in einer Seitenansicht und in einem anderen Maßstab,

Figur 4 eine aus mehreren Schneidwerkzeugen nach Figur 2 zusammengesetzte Schneidwalze in einer Draufsicht und im Ausschnitt,

Figur 5 ein rundlaufendes Schneidwerkzeug gemäß der Erfindung in einer zweiten Ausführungsform, im Querschnitt und im Ausschnitt und im einem anderen Maßstab, in einer Seitenansicht, und

Figur 6 das Schneidwerkzeug nach Figur 5 in einem Längsschnitt ähnlich Figur 2 und in der Draufsicht.

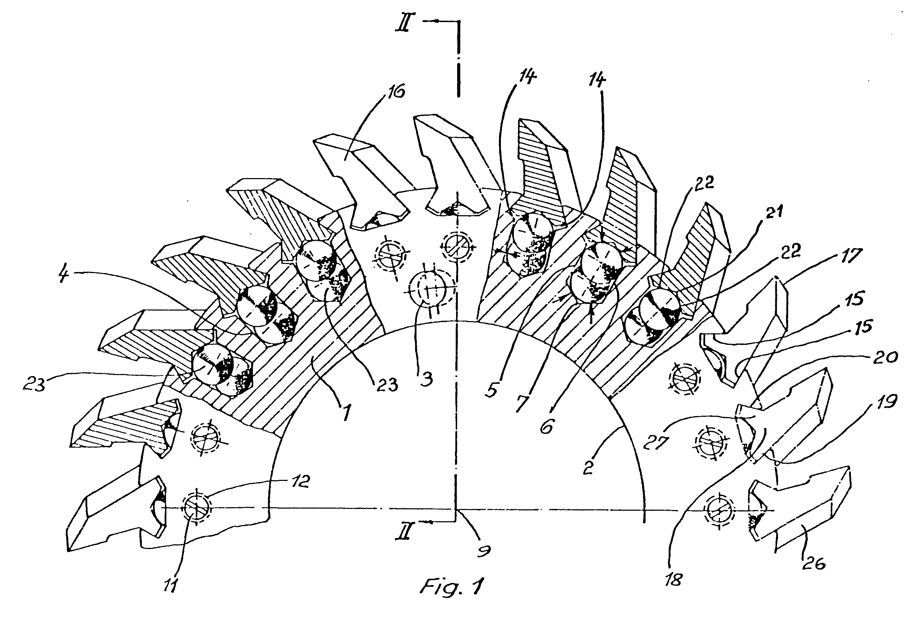

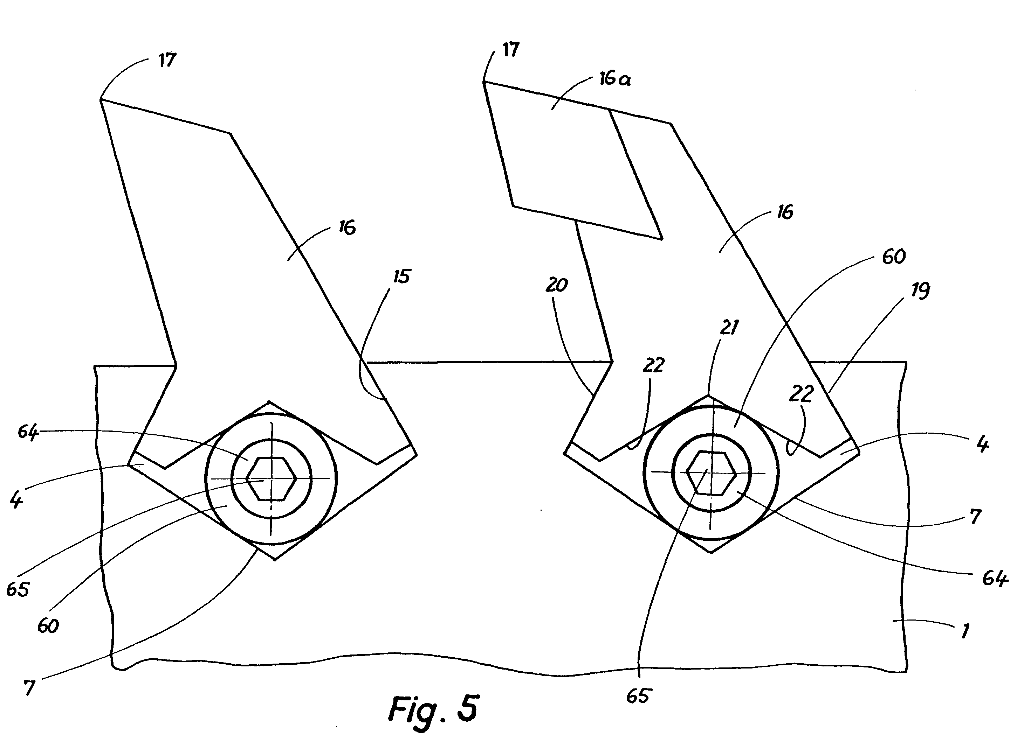

Das in den Fig. 1, 2 und 5, 6 in zwei Ausführungsformen dargestellte rundlaufende Schneidwerkzeug dient zum Stranggranulieren von Kunststoffmaterial. Es weist einen zylindrischen Werkzeugkörper 1 auf, der aus Stahl besteht und mit einer koaxialen Innenbohrung 2 ausgebildet ist, mit der er auf eine nicht weiter dargestellte Antriebswelle drehfest aufgesetzt werden kann. Stirnseitig trägt der Werkzeugkörper 1 achsparallele Paßbohrungen 3 bzw. diesen zugeordnete Paßbolzen 4, die es gestatten, die Werkzeugkörper in der aus Fig. 4 ersichtlichen Weise zu einer Schneidwalze zusammenzufügen.

Der Werkzeugkörper 1 ist mit einer Anzahl in Umfangsrichtung gleichmäßig verteilt angeordneter Längsnuten 4 versehen, von denen jede zwei parallele Seitenwände 5, 6 und eine im Querschnitt V-förmige Bodenwand 7 aufweist. Die Längsnuten verlaufen unter einem in Fig. 4 bei 8 angedeuteten Achswinkel von 2° bis 3° schräg geneigt zu der jeweiligen die Werkzeugkörperachse 9 enthaltenden Radialebene. Stirnseitig sind die Längsnuten 4 durch zwei Widerlager 10 abgeschlossen, die in einigem Abstand von der Umfangsfläche des Werkzeugkörpers 1 enden und von denen jedes eine Spanneinrichtung in Gestalt einer als Madenschraube ausgebildeten, von der Werkzeugkörperstirnseite her betätigbaren Spannschraube 11 trägt. Die parallel zu der jeweiligen Längsnut 4 ausgerichteten koaxialen Spannschrauben 11 sind in entsprechende Gewindebohrungen der Widerlager 10 eingeschraubt, deren Achsen in Umfangsrichtung mittig zu der zugeordneten Längsnut liegt.

Bei einem als Feingußteil hergestellten Werkzeugkörper 1 können die Widerlager 10 einstückig an dem Werkzeugkörper 1 ausgebildet sein. Aus Herstellungsgründen ist es aber einfacher, die Widerlager 10 an Stirnscheiben 13 auszubilden, die stirnseitig koaxial auf den Werkzeugkörper 1 aufgesetzt und mit diesem starr verschraubt sind. Damit können die Längsnuten 4 in dem Werkzeugkörper 1 durchgehend ausgefräst werden.

Im Bereiche der Nutenöffnung weist jede Längsnut 4 anschließend an die geraden parallelen Seitenwände 5, 6 zwei einander gegenüberliegende, durchgehende schwalbenschwanznutenartige Vertiefungen 14 auf, die sich oberhalb der Widerlager 10 bis zu den Stirnseiten des Werkzeugkörpers 1 bzw. der Stirnscheiben 13 erstrecken und sich somit zu den Stirnseiten hin öffnen. Die im Querschnitt etwa V-förmigen Vertiefungen 14 bilden zwei V-förmig aufeinander zu weisende und radial nach außen zu sich verjüngende Klemmflächen 15, die parallel zu der jeweiligen Längsnut 4 angeordnet sind.

In jede Längsnut 4 ist ein leistenförmiges Schneidelement 16 eingesetzt, dessen Schneidkanten 17 auf einem gemeinsamen Flugkreis laufen und das in seinem Fußbereich bei 18 mit zwei gegenüberliegenden V- oder keilförmig aufeinander zu weisenden Abstützflächen 19, 20 ausgebildet ist. Die Abstützflächen 19, 20 weisen die gleiche Neigung wie die zugeordneten Klemmflächen 15 des Werkzeugkörpers 1 auf, so daß bei in die Längsnuten 4 eingeschobenen Schneidelementen 16 die Schneidelemente 16 mit ihren Abstützflächen 19, 20 satt an den Klemmflächen 15 anliegen und im Zusammenwirken mit diesen eng toleriert, formschlüssig in ihrer jeweiligen Stellung gehalten sind, wie sie der zu erzielenden Schneidengeometrie entspricht.

Jedes Schneidelement 16 ist im Fußbereich 18 mit einer im Querschnitt etwa V-förmigen Längsnut 21 versehen, die von zwei den Abstützflächen 19, 20 gegenüberliegenden Anlageflächen 22 begrenzt ist.

In jede Längsnut 4 sind Klemmelemente in Gestalt von Stahlkugeln 23 angeordnet, deren Durchmesser geringfügig kleiner ist als die durch den Abstand der ebenen Seitenflächen 5, 6 gegebenen Längsnutbreite, derart, daß die Kugeln 23 mit etwas seitlichem Spiel in den Längsnuten 4 beweglich sind.

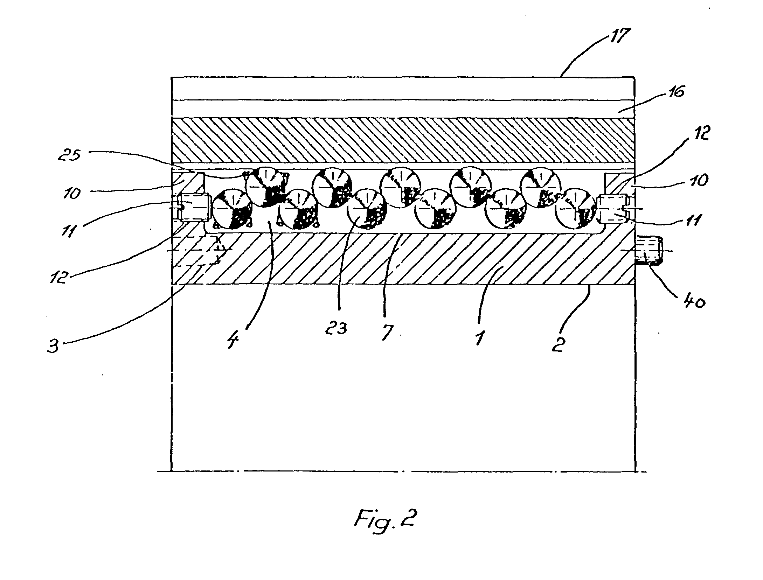

Die radiale Tiefe der Längsnuten 4 ist derart gewählt, daß die Kugeln 23 jeder Reihe, die in der zugeordneten Längsnut 4 mit ihren Mittelpunkten näherungsweise auf einer gemeinsamen die Werkzeugkörperdrehachse 9 enthaltenden Radialebene liegen, abwechselnd unterschiedliche radiale Mittelpunktsabstände von der Werkzeugkörperdrehachse 9 aufweisen, wie dies aus Fig. 2 zu ersehen ist. Jede zweite Kugel 23 liegt an den Anlageflächen 22 des die Längsnut 4 verschließenden Schneidelementes 16 an; sie wechselt jeweils mit einer Kugel 23 ab, die auf der Bodenwand 7 der Längsnut 4 abgestützt ist. Stirnseitig liegen die endständigen Kugeln 23 jeder Kugelreihe an den zugeordneten beiden Spannschrauben 11 an, die mit ihren Achsen im wesentlichen auf den Mittelpunkt dieser Kugeln ausgerichtet sind.

Bei der Montage der Spannelemente 16 wird in die jeweilige Längsnut 4 zunächst durch die Nutenöffnung die Kugelreihe eingefüllt, worauf das zugehörige Spannelement 16 von der Seite her mit seinem Fußbereich 18 eingeschoben wird, bis es die in den Fig. 1, 2 dargestellte Stellung einnimmt. Sodann werden die Spannschrauben 11 festgezogen, die bewirken, daß die Kugeln 23 der Kugelreihe, die sich über ihre Kugelflächen gegenseitig abstützen, abwechselnd radial nach außen und radial nach innen gegen die Anlageflächen 22 des Schneidelementes 16 bzw. gegen die Bodenwand 7 des Werkzeugkörpers 1 gepreßt werden. Damit wird das Schneidelemente 16 im wesentlichen in radialer Richtung gespannt, wobei es mit seinen Abstützflächen 19, 20 gegen die Klemmflächen 15 des Werkzeugkörpers 1 gepreßt und damit exakt lagerichtig fixiert wird.

Zum Austauschen eines Spannelementes 16 brauchen lediglich die zugeordneten Spannschrauben 11 gelöst zu werden, worauf das Spannelement 16 seitlich aus der zugeordneten Längsnut herausgeschoben werden kann.

Bei der dargestellten Ausführungsform sind jeder Längsnut 4 zwei koaxiale Spannschrauben 11 zugeordnet. Es sind auch Ausführungsformen denkbar, bei denen lediglich eine Spannschraube 11 pro Längsnut 4 vorhanden ist.

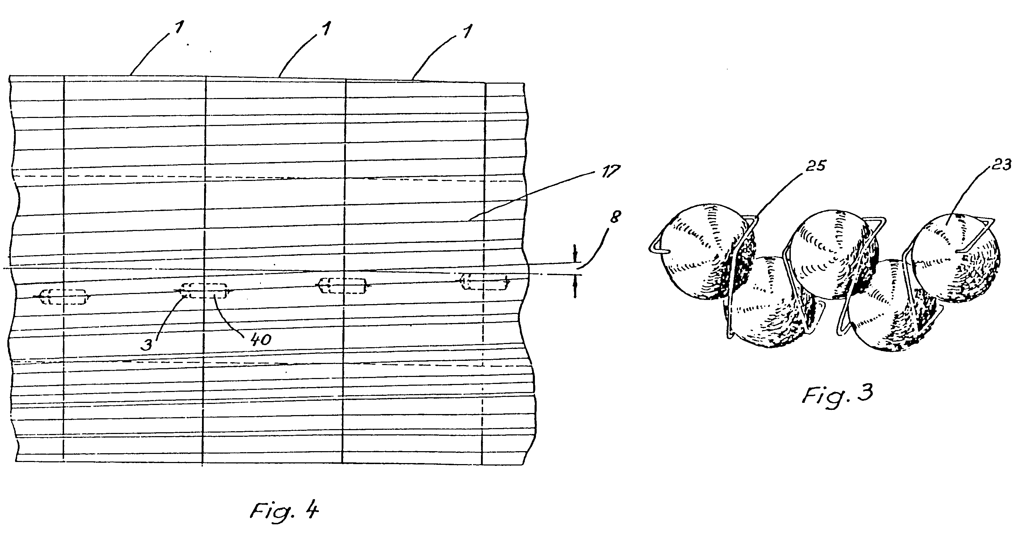

Um bei der Montage des Schneidwerkzeuges in einem ersten Schritt alle Längsnuten 4 mit den Kugeln 23 füllen zu können, bevor in einem zweiten Schritt aufeinanderfolgend die Schneidelemente 16 eingeschoben werden, können die Kugeln 23 jeder Kugelreihe in der zugeordneten Längsnut durch ein Drahtkäfig 25 gehalten sein, wie es in Fig. 3 veranschaulicht ist. Durch das Drahtkäfig 25 ist die Beweglichkeit der Kugeln 23 nicht beeinträchtigt.

Die Schneidelemente 16 können als Strangpreß- oder Feingußteile hergestellt werden, so daß jedes wirtschaftliche Verschleißmaterial eingesetzt werden kann. Lediglich die beiden als Spannflächen wirkenden Abstützflächen 19, 20, von denen die eine (19) unmittelbar an der ebenen Rückfläche 26 des Spannelementes 16 ausgebildet ist und die andere (20) an einem der Rückfläche 26 gegenüberliegenden Fuß 27 vorgesehen ist, brauchen maßhaltig bearbeitet zu werden.

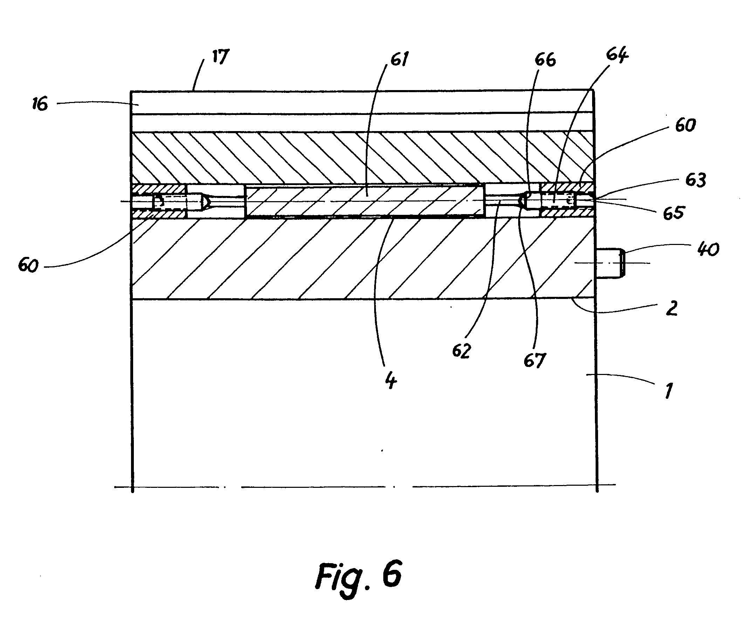

Die in den Fig. 5, 6 dargestellte zweite Ausführungsform des rundlaufenden Schneidwerkzeuges entspricht bis auf die Ausbildung der Klemmelemente im wesentlichen der ersten Ausführungsform, wie sie anhand der Fig. 1 bis 4 im Vorstehenden beschrieben wurde. Gleiche Teile beider Ausführungsformen sind deshalb mit gleichen Bezugszeichen versehen, wobei sich insoweit eine nochmalige Erläuterung erübrigt.

Die über die axiale Länge des zylindrischen Werkzeugkörpers 1 durchgehenden, in Umfangsrichtung gleichmäßig verteilt angeordneten Längsnuten 4 sind - verglichen mit der Ausführungsform nach den Fig. 1 bis 4 - ohne die parallelen Seitenwände 5, 6 ausgebildet, so daß sich die im Querschnitt V-förmige Bodenwand 7 unmittelbar an die bei jeder Längsnut 4 V-förmig aufeinander zu weisenden und radial nach außen zu sich verjüngenden Klemmflächen 15 anschließt, was insgesamt eine etwa schwalbenschwanzförmige Querschnittsform der Längsnuten 4 ergibt.

Die in die Längsnuten 4 eingesetzten leistenförmigen Schneidelemente 16 sind gleichgestaltet wie bei der erwähnten ersten Ausführungsform. Sie können entweder insgesamt aus einem geeigneten Schneidmaterial, beispielsweise Stellit, bestehen oder eingesetzte, aus Hartmetall hergestellte Schneidkörper 16a tragen (vgl. Fig. 5), an denen die Schneidkanten 17 ausgebildet sind.

Jedes der Schneidelemente 16 ist mit seinen beiden gegenüberliegenden V- oder keilförmig aufeinander zu weisenden Abstützflächen 19, 20 an den Klemmflächen 15 abgestützt und im Zusammenwirken mit diesen eng toleriert formschlüssig in der jeweiligen Stellung gehalten.

Zur Fixierung der Schneidelemente 16 sind in jede Längsnut 4 jeweils zwei Klemmelemente in Gestalt von zylindrischen Spannhülsen 60 eingesetzt, die von den beiden Stirnseiten des Werkzeugkörpers 1 aus in die jeweilige Längsnut 4 eingeschoben sind. Zwischen den beiden Spannhülsen 60 ist in jeder Längsnut 4 ein längliches Distanzstück 61 angeordnet, das beispielsweise aus Kunststoffmaterial bestehen kann, dessen Länge so bemessen ist, daß die beiden Spannhülsen 60 in dem der axialen Länge des Werkzeugkörpers 1 etwa entsprechenden gegenseitigen Abstand gehalten sind.

Jede der beispielsweise aus Messing bestehenden Spannhülsen 60 ist nach Art eines sogenannten Spreizdübels über einen Teil ihrer Länge mit beispielsweise drei gleichmäßig verteilt angeordneten Längsschlitzen 62 versehen, die von der Außenumfangsfläche bis in die zentrische Gewindebohrung 63 jeder Spannhülse 60 reichen. In die Gewindebohrung 63 ist eine Spannschraube 64 eingeschraubt, die einen von der jeweils benachbarten Stirnseite des Werkzeugkörpers 1 aus zugänglichen Schlüsselansatz 65 aufweist. Auf der gegenüberliegenden Seite trägt jede Spannschraube 64 eine konische Spreizfläche 66, mit der sie auf im Bereiche der Gewindebohrung 63 innenliegend angeordneten keilförmigen oder konischen Spannflächen 67 aufliegt, wie dies aus Fig. 6 zu ersehen ist.

Bei der Montage wird, ähnlich wie bei der Ausführungsform nach den Fig. 1 bis 4, in die jeweilige Längsnut 4 des Werkzeugkörpers 1 ein Schneidelement 16 eingeschoben, worauf ein Distanzstück 61 und die beiden Spannhülsen 60 von der jeweiligen Werkzeugkörperstirnseite her eingesetzt werden. Die Spannschrauben 64 sind dabei in den Spannhülsen 60 so weit zurückgedreht, daß die Spannhülsen 60 radial nicht aufgespreizt sind, so daß das Einschieben der Spannhülsen 60 mit Spiel möglich ist.

Nunmehr werden die beiden Spannschrauben 64 festgezogen. Dabei werden im Zusammenwirken der Spreizflächen 66 mit den Spannflächen 67 die längsgeschlitzten Teile der Spannhülsen 60 radial nach außen gegen die Anlagefächen 22 der Längsnut 21 des zugeordneten Schneidelementes 16 und gegen die gegenüberliegende, im Querschnitt V-förmige Bodenwand 7 der Längsnut 4 angepreßt, mit dem Ergebnis, daß das Schneidelement 16 mit seinen Abstützflächen 19, 20 satt an den zugeordneten Klemmflächen 15 anliegend exakt ausgerichtet formschlüssig fixiert wird.

Beim Auswechseln eines Schneidelementes 16 brauchen lediglich die Spannschrauben 64 der beiden zugeordneten Spannhülsen 60 gelöst werden, worauf die Spannhülsen 60 zusammen mit dem Schneidelement 16 aus der Längsnut 4 herausgeschoben werden können.

Diese im Vorstehenden beschriebene zweite Ausführungsform des Schneidwerkzeuges zeichnet sich deshalb ersichtlich durch einen besonders einfachen Aufbau der Spanneinrichtung für die Schneidelemente 16 aus. Gleichzeitig ist auch die Herstellung des Werkzeugkörpers 1 vereinfacht, weil die im Querschnitt schwalbenschwanzförmigen Längsnuten 4 mit geringem Zeitaufwand gefertigt werden können. Durch entsprechende Wahl der Länge der Spannhülsen 60 und der Steigung der Spreiz- und Spannflächen 66, 67 kann für jede axiale Länge des Werkzeugkörpers 1 eine einwandfreie Spannung der Schneidelemente 16 über ihre Länge gewährleistet werden.

## Patentansprüche

1. Rundlaufendes Schneidwerkzeug, insbesondere zum Stranggranulieren von Kunststoffen, mit einem zylindrischen Werkzeugkörper (1), der eine Anzahl in Umfangsrichtung gleichmäßig verteilt angeordneter Längsnuten (4) aufweist, die im Bereiche der Nutenöffnung mit einander gegenüberliegenden, aufeinander zu weisenden Klemmflächen (15) ausgebildet sind und von denen jede ein lösbar eingesetztes, sich im wesentlichen über die axiale Länge des Werkzeugkörpers erstreckendes, längliches Schneidelement (16) enthält, das den Klemmflächen (15) zugeordnete, entsprechend gestaltete Abstützflächen (19, 20) aufweist, mit denen es auf den Klemmflächen (15) lagefest verklemmt ist, wobei die Schneidelemente durch in die jeweilige Längsnut eingesetzte Klemmkörper im wesentlichen in Radialrichtung gegen den Werkzeugkörper (1) verspannt sind, welche gegen das jeweilige Schneidelement und gegen Wandungsteile der Längsnut abgestützt sind und wobei den Klemmkörpern wenigstens eine verstellbare Spanneinrichtung zugeordnet ist, dadurch gekennzeichnet, daß jedes Schneidelement (16) im Fußbereich (18) mit seinen Abstützflächen (19, 20) auf den zugeordneten maßhaltigen Klemmflächen der Längsnut genau lagerichtig in Radialrichtung formschlüssig abgestützt ist, daß die Klemmkörper Kugeln (23) sind, die jeweils in einer Reihe mit gegeneinander versetzten Mitten in eine Längsnut (4) eingesetzt sind, und daß jede Kugelreihe in Nutenlängsrichtung beidseitig gegen an dem Werkzeugkörper angeordnete Widerlager (10) abgestützt ist, von denen wenigstens eines die den Kugeln dieser Reihe ihre Vorspannung erteilende Spanneinrichtung (11) aufweist.

2. Rundlaufendes Schneidwerkzeug, insbesondere zum Stranggranulieren von Kunststoffen, mit einem zylindrischen Werkzeugkörper (1), der eine Anzahl in Umfangsrichtung gleichmäßig verteilt angeordneter Längsnuten (4) aufweist, die im Bereiche der Nutenöffnung mit einander gegenüberliegenden, aufeinander zu weisenden Klemmflächen (15) ausgebildet sind und von denen jede ein lösbar eingesetztes, sich im wesentlichen über die axiale Länge des Werkzeugkörpers erstreckendes, längliches Schneidelement (16) enthält, das den Klemmflächen (15)

zugeordnete, entsprechend gestaltete Abstützflächen (19, 20) aufweist, mit denen es auf den Klemmflächen (15) lagefest verklemmt ist, wobei die Schneidelemente durch in die jeweilige Längsnut eingesetzte Klemmkörper im wesentlichen in Radialrichtung gegen den Werkzeugkörper (1) verspannt sind, welche gegen das jeweilige Schneidelement und gegen Wandungsteile der Längsnut abgestützt sind und wobei den Klemmkörpern wenigstens eine verstellbare Spanneinrichtung zugeordnet ist, dadurch gekennzeichnet, daß jedes Schneidelement (16) im Fußbereich (18) mit seinen Abstützflächen (19, 20) auf den zugeordneten maßhaltigen Klemmflächen der Längsnut genau lagerichtig in Radialrichtung formschlüssig abgestützt ist, daß die Klemmkörper zylindrische Spannhülsen (60) sind, die über einen Teil ihrer Länge geschlitzt und im Bereiche ihrer Bohrung (63) mit innenliegenden keilförmigen oder konischen Spannflächen (67) ausgebildet sind, welche auf einer konischen Spreizfläche (66) einer in die ein Innengewinde tragende Bohrung (63) eingeschraubten Spannschraube (64) abgestützt sind und daß in jede Längsnut (4) wenigstens zwei Spannhülsen (60) mit von der Stirnseite des Werkzeugkörpers (1) her zugänglichen Spannschrauben (64) eingesetzt sind.

3. Schneidwerkzeug nach Anspruch 1, dadurch gekennzeichnet, daß die Längsnutenbreite im wesentlichen gleich oder geringfügig größer als der Kugeldurchmesser ist.

4. Schneidwerkzeug nach Anspruch 1 oder 3, dadurch gekennzeichnet, daß die Kugeln (23) jeder Reihe durch ein Käfig (25) in der zugeordneten Längsnut (4) gehalten sind.

5. Schneidwerkzeug nach Anspruch 2, dadurch gekennzeichnet, daß in jeder Längsnut (4) wenigstens ein zwischen den Spannhülsen (60) liegendes Distanzstück (61) angeordnet ist.

6. Schneidwerkzeug nach einem der vor-hergehenden Ansprüche, dadurch gekenn-zeichnet, daß die jeweils paarweise einander zugeordneten Klemmflächen (15) jeweils im wesentlichen V-förmig aufeinander zu weisend ausgebildet sind.

7. Schneidwerkzeug nach einem der vor-hergehenden Ansprüche, dadurch gekenn-zeichnet, daß die Klemmflächen (15) durch nutenartige Vertiefungen (14) in den Seitenwänden (5, 6) der Längsnuten (4) gebildet sind.

8. Schneidwerkzeug nach Anspruch 7, dadurch gekennzeichnet, daß die nutenartigen Vertiefungen (14) über die axiale Länge des Werkzeugkörpers (1) bis zu dessen Stirnseiten durchgehend ausgebildet sind.

9. Schneidwerkzeug nach einem der vor-hergehenden Ansprüche, dadurch gekenn-zeichnet, daß die Schneidelemente (16) in dem in den Längsnuten (4) liegenden Fußbereich (18) den Abstützflächen (19, 20) gegenüberliegende Anlageflächen (22) für die Klemmkörper (23, 60) aufweisen und diese Anlageflächen (22) durch eine im Querschnitt etwa V-förmige Nute (21) gebildet sind.

10. Schneidwerkzeug nach einem der vor-hergehenden Ansprüche, dadurch gekenn-zeichnet, daß die Längsnuten (4) in ihrer Bodenwand (7) der Klemmkörperform angepaßte Anlageflächen aufweisen.

11. Schneidwerkzeug nach Anspruch 10, dadurch gekennzeichnet, daß die Längsnuten (4) im Querschnitt im wesentlichen schwalbenschwanzförmig ausgebildet sind.

12. Schneidwerkzeug nach einem der vor-hergehenden Ansprüche, dadurch gekenn-zeichnet, daß bei jedem Schneidelement (16) eine der Abstützflächen (19, 20) an einem seitlich vorragenden Fuß (27) ausgebildet ist.

**Claims**

1. A rotary cutting tool, more particularly for the continuous granulation of plastics, having a cylindrical tool body (1) having a number of longitudinal grooves (4) which are disposed uniformly distributed in the peripheral direction and which are formed in the zone of the groove opening with opposite clamping faces (15) pointing towards one another and of which each comprises a releasably inserted, elongate cutting element (16) extending substantially over the axial length of the tool body and having correspondingly shaped bearing surfaces (19, 20) which are associated with the clamping faces (15) and by which it is clamped fixed in position on the clamping faces (15), the cutting elements being stressed substantially in the radial direction against the tool body (1) by clamping members inserted in the particular longitudinal groove, the clamping members bearing against the particular cutting element and against wall portions of the longitudinal groove, at least one adjustable tensioning device being associated with the clamping members, characterized in that each cutting element (16) bears positively in the precisely correct position in the radial direction in the base zone (18) via its bearing faces (19, 20) against the associated accurately dimensioned clamping surfaces of the longitudinal groove; the clamping members are balls (23) which are each inserted in a longitudinal groove (4) in a row with centres offset in relation to one another; and each row of balls bears in the longitudinal direction of the groove on both sides against abutments (10) which are disposed on the tool body and of which at least one has the tensioning device (11) which confers its prestressing on the balls of such row.

2. A rotary cutting tool, more particularly for the continuous granulation of plastics, having a cylindrical tool body (1) having a number of longitudinal grooves (4) which are disposed uniformly distributed in the peripheral direction and which are formed in the zone of the groove opening with opposite clamping faces (15) pointing towards one another and of which each comprises a releasably inserted, elongate cutting element (16) extending substantially over the axial length of the tool body and having correspondingly shaped bearing surfaces (19, 20) which are associated with the clamping faces (15) and by which it is clamped fixed in position on the clamping faces (15), the cutting elements being stressed substantially in the radial direction against the tool body (1) by clamping members inserted in the particular longitudinal groove, the clamping members bearing against the particular cutting element and against wall portions of the longitudinal groove, at least one adjustable tensioning device being associated with the clamping members, characterized in that each cutting element (16) bears positively in the precisely correct position in the radial direction in the base zone (18) via its bearing faces (19, 20) against the associated accurately dimensioned clamping surfaces of the longitudinal groove; the clamping members are cylindrical clamping sleeves (60) slotted over a portion of their length and formed in the zone of their bore (63) with internal wedge-shaped or conical clamping faces (67) which bear against a conical expanding face (66) of a tightening screw (64) screwed into an internally screwthreaded bore (63); and at least two clamping sleeves (60) having a tightening screw (64) accessible from the end face of the tool body (1) are inserted in each longitudinal groove (4).

3. A cutting tool according to claim 1, characterized in that the width of the longitudinal grooves is substantially equal to or slightly larger than the diameter of the balls.

4. A cutting tool according to claims 1 or 3, characterized in that the balls (23) of each row are retained in the associated longitudinal groove (4) by a cage (25).

5. A cutting tool according to claim 2, characterized in that at least one spacing member (61) lying between the clamping sleeves (60) is disposed in each longitudinal groove (4).

6. A cutting tool according to any of the preceding claims, characterized in that the associated pairs of clamping faces (15) are each constructed pointing towards one another substantially in V-shape.

7. A cutting tool according to any of the preceding claims, characterized in that the clamping faces (15) are formed by groove-like depressions (14) in the side walls (5, 6) of the longitudinal grooves (4).

8. A cutting tool according to claim 7, characterized in that the groove-like depressions (14) are formed continuously over the axial length of the tool body (1) as far as its end faces.

9. A cutting tool according to any of the preceding claims, characterized in that the cutting elements (16) have in the base zone (18) lying in the longitudinal grooves (4) contact faces (22) for the clamping members (23, 60), such contact faces (22) being opposite the bearing faces (19, 20) and being formed by a groove (21) substantially V-shaped in cross-section.

10. A cutting tool according to any of the preceding claims, characterized in that the longitudinal grooves (4) have in their end wall (7) contact faces adapted to the shape of the clamping members.

11. A cutting tool according to claim 10, characterized in that the longitudinal grooves (4) are substantially dovetail-shaped in cross-section.

12. A cutting tool according to any of the preceding claims, characterized in that in each cutting element (16) one of the bearing surfaces (19, 20) is constructed on a laterally projecting base (27).

## Revendications

1. Outil de coupe rotatif, en particulier pour la granulation de matière plastique, comprenant un corps d'outil (1) cylindrique présentant une pluralité de rainures longitudinales (4) qui sont réparties uniformément sur la périphérie, qui présentent, dans la zone des ouvertures des rainures, des surfaces de blocage (15) mutuellement opposées, tournées l'une vers l'autre, et qui contiennent chacune un élément de coupe (16) allongé, rapporté de façon amovible, s'étendant essentiellement sur la longueur axiale du corps d'outil, cet élément présentant des surfaces d'appui (19, 20) qui sont associées aux surfaces de blocage (15), qui sont conformées de façon correspondante et par lesquelles il est bloqué en position sur les surfaces de blocage (15), les éléments de coupe étant serrés essentiellement en direction radiale contre le corps d'outil (1) par des corps de blocage qui sont rapportés dans la rainure longitudinale respective et sont appuyés contre l'élément de coupe respectif et contre des parties de paroi de la rainure longitudinale, au moins un dispositif de serrage réglable étant associé aux corps de blocage, caractérisé par le fait que chaque élément de coupe (16) est en appui, dans la zone de base (18), par ses surfaces d'appui (19, 20), avec précision en position correcte en direction radiale par complémentarité de forme sur les surfaces de blocage associées, realisées aux cotes correctes, de la rainure longitudinale, que les corps de serrage sont constitués par des billes (23) rapportées respectivement en une rangée, avec leurs centres mutuellement décalés, dans une rainure longitudinale (4), et que chaque rangée de billes est en appui, dans la direction longitudinale des rainures, des deux côtés contre des contre-appuis (10) qui sont disposés sur le corps d'outil et dont au moins l'un présente le dispositif de serrage (11) imprimant leur précontrainte aux billes de cette rangée.

2. Outil de coupe rotatif, en particulier pour la granulation de matière plastique, comprenant un corps d'outil (1) cylindrique qui présente une pluralité de rainures longitudinales (4) qui sont réparties uniformément sur la périphérie, qui présentent, dans la zone des ouvertures des rainures, des surfaces de blocage (15) mutuellement opposées tournées l'une vers l'autre, et qui contiennent chacun un élément de coupe (16) allongé rapporté de façon amovible, s'étendant essentiellement sur la longueur axiale du corps d'outil, cet élément présentant des surfaces d'appui (19, 20) qui sont associées aux surfaces de blocage (15), qui sont conformées de façon correspondante et par lesquelles il est bloqué en position sur les surfaces de blocage (15), les éléments de coupe étant serrés essentiellement en direction radiale contre le corps d'outil (1) par des corps de blocage qui sont rapportés dans la rainure longitudinale respective et sont appuyés contre l'élément de coupe respectif et contre des parties de paroi de la rainure longitudinale, au moins un dispositif de serrage réglable étant associé aux corps de blocage, caractérisé par le fait que chaque élément de coupe (16) est en appui, dans la zone de base (18), par ses surfaces d'appui (19, 20), avec précision en position correcte en direction radiale par complémentarité de forme sur les surfaces de blocage associées, réalisées aux cotes correctes, de la rainure longitudinale, que les corps de blocage sont constitués par des douilles de serrage (60) cylindriques qui sont fendues sur une partie de leur longueur et sont conformées, dans la zone de leur alésage (63), avec des surfaces de serrage (67) intérieures, cunéiformes ou coniques, qui prennent appui sur une surface d'expansion (66) conique d'une vis de serrage (64) vissée dans l'alésage (63) taraudé, et qu'au moins deux douilles de serrage (60) sont insérées, avec des vis de serrage (64) accessibles depuis le côté frontal du corps d'outil (1), dans chaque rainure longitudinale (4).

3. Outil de coupe suivant la revendication 1, caractérisé par le fait que la largeur des rainures longitudinales est essentiellement égale ou légèrement supérieure au diamètre des billes.

4. Outil de coupe suivant la revendication 1 ou 3, caractérisé par le fait que les billes (23) de chaque rangée sont maintenues par une cage (25) dans la rainure longitudinale (4) associée.

5. Outil de coupe suivant la revendication 2, caractérisé par le fait qu'au moins une pièce d'espacement (61) située entre les douilles de serrage (60) est disposée dans chaque rainure longitudinale (4).

6. Outil de coupe suivant l'une des revendications précédentes, caractérisé par le fait que les surfaces de blocage (15) associées respectivement par paires sont conformées de manière à converger respectivement l'une vers l'autre essentiellement en forme de V.

7. Outil de coupe suivant l'une des revendications précédentes, caractérisé par le fait que les surfaces de blocage (15) sont constituées par des creux (14) en forme de rainures dans les parois latérales (5, 6) des rainures longitudinales (4).

8. Outil de coupe suivant la revendication 7, caractérisé par le fait que les creux (14) en forme de rainures sont réalisés en continu sur toute la longueur axiale du corps d'outil (14) jusqu'aux côtés frontaux de ce dernier.

9. Outil de coupe suivant l'une des revendications précédentes, caractérisé par le fait que les éléments de coupe (16) présentent, dans la zone de base (18) située dans les rainures longitudinales (4), des surfaces d'application (22) destinées aux corps de blocage (23, 60) et se trouvant en face des surfaces d'appui (19, 20) et que ces surfaces d'application (22) sont constituées par une rainure (21) à profil à peu près en V.

10. Outil de coupe suivant l'une des revendications précédentes, caractérisé par le fait que les rainures longitudinales (4) présentent, dans leur paroi de fond (7), des surfaces d'application adaptées à la forme des corps de blocage.

11. Outil de coupe suivant la revendication 10, caractérisé par le fait que les rainures longitudinales (4) présentent un profil transversal essentiellement en queue d'aronde.

12. Outil de coupe suivant l'une des revendications précédentes, caractérisé par le fait que pour chaque élément de coupe (16), l'une des surfaces d'appui (19, 20) est formée sur un pied (27) faisant saillie latéralement.

Fig. 1

EP 0 182 037 B1

Fig. 2

Fig. 3

Fig. 4

Fig. 5

EP 0 182 037 B1

Fig. 6